# EUROPEAN PATENT SPECIFICATION

(11) **EP 3 805 182 B1**
(45) Date of publication and mention of the grant of the patent: **03.05.2023**
(21) Application number: 19202324.0
(22) Date of filing: 09.10.2019
(51) Int. Cl.: C04B 28/12, C04B 28/18, C04B 41/00

(54) **PROCESS FOR THE WATERPROOFING OF POROUS CONSTRUCTION MATERIALS**
VERFAHREN ZUR WASSERABDICHTUNG VON PORÖSEN BAUMATERIALIEN
PROCÉDÉ D'IMPERMÉABILISATION DE MATÉRIAUX DE CONSTRUCTION POREUSE

(43) Date of publication of application: 14.04.2021
(73) Proprietor: SIKA TECHNOLOGY AG, 6340 Baar (CH)
(72) Inventor: PERRINO, Luigi, 38069 Nago Torbole (IT); RATTIGHIERI, Tiziano, 41122 Modena (IT); LEONETTA, Romualdo, 22100 Como (IT); CAMURATI, Marco, 41053 Maranello (IT); GRANIZO, Luz, 28043 Madrid (ES)
(74) Representative: Sika Patent Attorneys

(56) References cited:
- WO-A1-2017/071722
- US-A- 5 951 751
- US-B1- 6 217 646

## Description

### TECHNICAL FIELD

The invention relates to a process for the waterproofing of porous construction materials.

### BACKGROUND OF THE INVENTION

Water absorption of porous construction materials is one of the main causes for damages and optical defects. Water penetrates through the pore structure into construction materials such as mortar, concrete, masonry, or tiles. Water is further transported by capillary suction from the surface into the bulk of these materials. Such water penetration may cause damages such as corrosion of rebars, frost and de-icing salt damage or optical defects such as efflorescence. It is well known that waterproofing of construction materials is necessary to reduce or prevent damages. The application of waterproofing systems to construction materials, and especially to porous construction materials, is well known. Suitable waterproofing systems are, for example, membranes. Membranes can be based on polymeric binders, in particular thermoplastics or elastomers. However, the installation of polymeric membranes on a job site can be difficult, especially if complex geometries are involved and significant detailing is required.

Liquid applied membranes are thus available which offer easier application. Liquid applied membranes can be based on reactive organic binders, e.g. polyurethanes. Such systems frequently have the drawback that they require the use of solvents and/or hazardous chemicals which is unfavorable for environmental, health, and safety (EHS) reasons.

Liquid applied membranes may also be based on inorganic binders, especially hydraulic binders, such as cement, which typically have less EHS risks. Liquid applied membranes based on inorganic hydraulic binders are typically also referred to as waterproofing mortars, renders or plasters.

EP 0798274 discloses a plaster for waterproofing of masonry or concrete. The plaster disclosed therein comprises a mixture of ordinary Portland cement (OPC), natural hydraulic lime (NHL), and optional air lime as binder. OPC is an integral part of the compositions disclosed and is needed to achieve the desired properties.

Portland cement is one of the most widely used substances worldwide and has many benefits. However, its production is associated with significant emissions of CO₂, which in part are a result of the burning of organic materials as fuel to achieve the high temperatures - 1450 °C in the case of ordinary Portland cement (OPC) - needed for the cement production. It is estimated that the production of cement is responsible for approximately 8% of CO₂ emissions worldwide. With the goal of achieving significant reductions of CO₂ emissions it is highly desirable to use alternatives to OPC and other cements calcined at high temperatures. The use of hydraulic lime binders are such an alternative as their manufacture is possible at significantly lower temperature of 800-1200 °C and thus generates up to 60% less CO₂ compared to OPC.

The shrinkage of OPC and other cements during the hardening constitutes another limitation as this usually leads to micro-cracks in hardened structures and thus to lower mechanical strength and higher permeability to water. Additionally, the use of OPC as a binder for waterproofing mortars leads to high hardness and brittleness of hardened materials. This is especially problematic when such waterproofing mortars are applied to weak substrates as is often the case in the field of restauration of historical buildings. Again, the use of hydraulic lime as binder can overcome these limitations.

It would therefore be desirable to use waterproofing mortars which are free of Portland cement.

US 9067830 discloses compositions free of OPC or other cementitious materials. The compositions are based on hydrated lime and pozzolanic material such as synthetic precipitated silica or silica gel. The silicas disclosed therein constitute a good source of SiOz for the pozzolanic reaction but are significantly higher in cost compared to more standard pozzolanes such as metakaolin, fly ash or furnace slag.

WO 2017/071722 discloses a mineral sealing mortar to be applied to the plinth of a building for moisture protection. The sealing mortar comprising in a dry state 60 - 70 w% of aggregate, 10 - 25 w% of a mineral binder, 0.1 - 1.0 w% of fibers, 0.01 - 1.0 w% of silicates, 0.015 - 1.0 w% of modified starch, 0.3 - 0.7 w% of hydrophobic agent and 5-9 w% of an adhesion agent. The mineral binder comprises or consists of Portland cement or calcium hydroxide.

US5951751 relates to a flowable fill composition comprising 1 - 15 w% of a lime component, 10 - 45 w% of a pozzolanic material comprising a reactive siliceous aluminous component, 20 - 95 w% of aggregate, 10 - 20 w% of water.

US6217646 discloses a coating mortar compound for surface levelling comprising hydraulic lime, Portland cement, vinyl acetate resin, mineral filler, and second filler, and which remains water vapor permeable.

However, the known prior art does not teach compositions with a low content of Portland cement or free of Portland cement and which lead to improved waterproofing of porous construction materials.

There is thus a need for novel processes for waterproofing of porous construction materials which are able to overcome the above mentioned drawbacks.

### SUMMARY OF THE INVENTION

It is an objective of the present invention to provide a novel process for the waterproofing of porous construction materials.

This objective is achieved by a process as disclosed in claim 1.

Claim 1 is directed to a process for the waterproofing of porous construction materials, said process comprising the steps of
- mixing water and a composition **C,** the composition **C** comprising, in each case based on the total weight of the composition **C,**
   a) 2 - 15 wt.-% of at least one binder selected from natural hydraulic lime (NHL), formulated lime (FL), and hydraulic lime (HL),
   b) 1 - 20 wt.-% of at least one pozzolanic material,
   c) 40 - 80 wt.-% of at least one aggregate,
   d) 2 - 30 wt.-% of at least one synthetic polymer,
   and wherein the content of Portland cement in said composition **C** is < 3 wt.-%, preferably < 2 wt.-%, more preferably < 1 wt.-%, still more preferably < 0.5 wt.- %, especially < 0.1 wt.-%,
- applying the mixture thus obtained to a porous construction material, and
- optionally hardening the applied mixture.

Surprisingly, it has been found that a process as claimed in claim 1 is capable of significantly reducing the water uptake of porous construction materials. A reduction of water uptake of a porous construction material, within the present context, is equivalent to a reduction of the coefficient of capillary water uptake of said porous construction material. The coefficient of capillary water uptake is measured according to standard EN 1062-3.

It is another advantage of a process according to the present invention that the adhesion of the hardened mixture of water and a composition **C** to porous construction materials is very good. Especially, the adhesion to cementitious materials as measured according to EN 14891 exceeds 0.5 MPa, preferably exceeds 0.75 MPa, if stored under dry or humid conditions.

It is yet another advantage of a process of the present invention that the shrinkage upon curing of the mixture of water and composition **C** is very low and especially lower as compared to a cement based material. This will lead to less cracking of the mixture during hardening. This will also exert less stress on the porous construction material to which the mixture is applied.

Preferred embodiments of the present invention are subject matter of the dependent claims.

### DETAILED DESCRIPTION

A first aspect of the present invention is a process for the waterproofing of porous construction materials, said process comprising the steps of
- mixing water and a composition **C,** the composition **C** comprising, in each case based on the total weight of the composition **C,**
   a) 2 - 15 wt.-% of at least one binder selected from natural hydraulic lime (NHL), formulated lime (FL), and hydraulic lime (HL),
   b) 1 - 20 wt.-% of at least one pozzolanic material,
   c) 40 - 80 wt.-% of at least one aggregate,
   d) 2 - 30 wt.-% of at least one synthetic polymer,
   and wherein the content of Portland cement in said composition **C** is < 3 wt.-%, preferably < 2 wt.-%, more preferably < 1 wt.-%, still more preferably < 0.5 wt.- %, especially < 0.1 wt.-%,
- applying the mixture thus obtained to a porous construction material, and
- optionally hardening the applied mixture.

Porous construction materials in the sense of the present invention are construction materials with a porosity large enough to allow the uptake of water and the transport of water by capillary suction. Porous construction materials are preferably selected from the list consisting of cementitious materials, especially concrete or mortar, bricks, especially clay bricks, poroton stone, sand limestone, aerated concrete stone, ceramic tiles with a water absorption of > 0.5 % as measured according to EN 1062-3, calcium sulfate based materials, and wood. It is most preferred, within the context of the present invention, that the process for the waterproofing of porous construction materials is a process for the waterproofing of cementitious materials or screeds. A cementitious material is a material which comprises cement as the main binder component. In an especially preferred embodiment, the cementitious material is hardened concrete or mortar. Screeds are typically based on calcium sulfate based binders, cementitious binders, or MgO.

According to a preferred embodiment, the present application thus refers to a process for the waterproofing of cementitious materials or screeds, especially concrete or mortar, said process comprising the steps of
- mixing water and a composition **C,** the composition **C** comprising, in each case based on the total weight of the composition **C,**
   a) 2 - 15 wt.-% of at least one binder selected from natural hydraulic lime (NHL), formulated lime (FL), and hydraulic lime (HL),
   b) 1 - 20 wt.-% of at least one pozzolanic material,
   c) 40 - 80 wt.-% of at least one aggregate,
   d) 2 - 30 wt.-% of at least one synthetic polymer,
   and wherein the content of Portland cement in said composition **C** is < 3 wt.-%, preferably < 2 wt.-%, more preferably < 1 wt.-%, still more preferably < 0.5 wt.- %, especially < 0.1 wt.-%,
- applying the mixture thus obtained to a cementitious material or screed, and
- optionally hardening the applied mixture.

The terms natural hydraulic lime, formulated lime, hydraulic lime, and air lime as used in the context of the present invention refer to materials as described in the standard EN 459-1:2015.

More specifically, the term natural hydraulic lime (NHL), within the present context, refers to materials derived solely from mineral deposits and naturally containing all elements (usually limestone, clay and impurities) to produce a hydraulic lime in a calcination process, typically at temperatures between 800 and 1200 °C. Natural hydraulic lime may act as a hydraulic binder in mortar compositions. NHL in the context of the present invention belongs to any of the classes NHL2, NHL3.5 or NHL5 according to EN 459-1 :2015, preferably to classes NHL3.5 or NHL5, more preferred to class NHL5.

The term hydraulic lime (HL) as used herein refers to a material which can be produced from limestone by thermal decomposition in a process called calcination at temperatures between 800 and 1200 °C. Hydraulic lime essentially consists of CaO and/or Ca(OH)₂ and additional siliceous and/or alumosiliceous materials. HL in the context of the present invention belongs to any of the classes HL2, HL3.5 or HL5 according to EN 459-1:2015, preferably to classes HL3.5 or HL5, more preferred to class HL5.

Formulated lime (FL) as used herein refers to a material with hydraulic properties and which is based on air lime or NHL with additional hydraulic and/or pozzolanic materials added. FL within the present context belongs to class FL A. Within the context of the present invention FL is essentially free of Portland cement.

It is highly preferred within the context of the present invention to use natural hydraulic lime (NHL) in a composition **C.** NHL can be any lime with hydraulic properties from naturally occurring sources. Even though there are no specific preferences given regarding other properties of the NHL it is known to the person skilled in the art that certain properties can be used advantageously. It is, for example, possible to use NHL with a high whiteness index as a binder which more closely matches aggregate and/or substrate color. Commercial sources for natural hydraulic lime are for example the companies Lafarge or St. Astier. It can be advantageous and in certain cases preferred to use mixtures of different types of NHL.

A composition **C** comprises at least one binder selected from NHL, HL, and FL, in 2 - 15 wt.-%, preferably 3 - 10 wt.-%, more preferably 5-8 wt.-%, each based on the total weight of the composition **C.** Of course, mixtures of NHL, HL, and FL are also possible. Most preferably, a composition **C** comprises at least one NHL and no HL or FL. In a most preferred embodiment, a composition **C** thus comprises at least one NHL in 2 - 15 wt.-%, preferably 3 - 10 wt.-%, more preferably 5-8 wt.-%, each based on the total weight of the composition **C.**

The term pozzolanic material as used in the context of the present invention refers to a class of materials that do not act as hydraulic binders themselves but will react chemically with Ca(OH)₂ in the presence of water and at room temperature to form materials with cementitious properties. Materials with latent hydraulic properties are thus also encompassed by the term pozzolanic material within the present context. Especially, pozzolanic materials within the present context are siliceous or alumosiliceous materials.

A composition **C** comprises at least one pozzolanic material. Pozzolanic materials useful for compositions **C** include but are not limited to metakaolin, silica fume, furnace slag, fly ash, rice husk ash, pumice, volcanic ashes, zeolites and diatomaceous earth. According to embodiments the at least one pozzolanic material is selected from metakaolin, silica fume, furnace slag, fly ash, rice husk ash, pumice, volcanic ashes, zeolites and/or diatomaceous earth. Any other material with pozzolanic properties known to the person skilled in the art may also be used for a composition **C.** In a preferred embodiment of the present invention metakaolin, furnace slag, fly ash, silica fume or mixtures thereof are used in a composition **C.** It is especially preferred to use furnace slag and/or silica fume in a composition **C.**

A composition **C** comprises at least one pozzolanic material in 1 - 20 wt.-%, preferably 2 -16 wt.-%, more preferably 5 - 10 wt.-%, each based on the total weight of the composition **C.**

According to a preferred embodiment, the weight ratio of the at least one binder selected from natural hydraulic lime (NHL), formulated lime (FL), and hydraulic lime (HL) to the at least one pozzolanic material in a composition **C** can vary between 15:2 and 1:10, preferably between 5:1 and 1:8. For the calculation of said weight ratio, the total weight of binder selected from any of natural hydraulic lime (NHL), formulated lime (FL), and/or hydraulic lime (HL) as well as the total weight of pozzolanic materials is to be used.

The term aggregate as used herein means a particulate material that does not participate in the hydraulic reaction. Examples for aggregates include sand, gravel, slag, and crushed stone such as for example crushed limestone. Aggregates can be characterized by their granulometry, which can be measured for example by sieve analysis according to standard DIN 66165-2:2016.

Aggregates can be any materials known to the person skilled in the art. Examples for aggregates comprise but are not limited to sands, preferably silica sands, quartz sands, river sands, crushed rocks, preferably crushed carbonate materials, specifically crushed limestone, chalk and/or marble, and/or gravel. According to especially preferred embodiments, aggregates to be used in a composition **C** are sands and/or calcium carbonate. According to especially preferred embodiments, mixtures of two or more different aggregates are used in a composition **C.** Aggregates may differ in their chemical composition and/or in their granulometry.

Aggregates used in the context of the present invention preferably are characterized by a granulometry with a grain size between 0.01 and 10 mm, preferably 0.05 and 5 mm, most preferred between 0.06 and 1 mm, meaning that less than 1% of aggregate used has a particle size outside the given ranges when measured according to DIN 66165-2:2016.

A composition **C** to be used in a process of the present invention comprises at least one aggregate in 40 - 80 wt.-%, preferably 45 - 70 wt.-%, more preferably in 50 - 65 wt.-%, each based on the total weight of the composition **C.**

Synthetic polymers within the present context are polymers which can be produced by polymerization of suitable monomers. Suitable monomers are selected form the group consisting of ethylene, propylene, butylene, isoprene, butadiene, styrene, acrylonitrile, acrylic acid, methacrylic acid, esters of acrylic acid, esters of methacrylic acid, vinylesters, vinylchloride, vinyl alcohol. It is preferred that synthetic polymers are copolymers synthesized from two or more, preferably two, different monomers. Highly preferred are copolymers based on vinyl esters, ethylene and/or acrylic acid esters.

Preferred synthetic polymers are copolymers of vinylacetate and ethylene, vinylacetate and ethylene and methylmethacrylate, vinylacetate and ethylene and vinylester, vinylacetate and ethylene and acrylic acid ester, vinylchloride and ethylene and vinyllaureate, vinylacetate and vinylveratate, acrylic ester and styrene, acrylic ester and styrene and butadiene, acrylic ester and acrylonitrile, styrene and butadiene, acrylic acid and styrene, methacrylic acid and styrene, styrene and acrylic acid ester, styrene and methacrylic acid ester. It is possible and in certain cases preferred to use mixtures of more than one of the said synthetic polymers in compositions of the present invention.

Synthetic polymers of the present invention can be used in liquid form such as dispersions of synthetic polymer in solvents, preferably in water. The solid content of such polymer dispersions can vary between 20 wt.-% and 75 wt.-%, based on the weight of the dispersion. Suitable dispersions are for example available from BASF SE under the trade name Acronal or from Synthomer plc under the trade name Revacryl.

Synthetic polymers of the present invention can also be used in solid form such as for example as redispersible polymer powders. The term redispersible polymer powder refers to a powder which contains a polymer and after introduction into water forms a stable dispersion. A redispersible polymer powder encompasses not only the polymer but typically also mixtures thereof with e.g. protective colloids, emulsifiers, and support materials. Such redispersible polymer powders can be manufactured for example by spray drying of polymer dispersions as for example described in patent application EP1042391. Suitable redispersible polymer powders are for example available from Wacker Chemie AG under the trade name Vinnapas. The use of redispersible powders of synthetic polymers is preferred within the context of the present invention.

According to particularly preferred embodiments of the present invention, the synthetic polymer is in the form of a redispersible polymer powder.

The glass transition temperature (Tg) of said synthetic polymers can vary in a wide range. Preferably, the polymer is soft and flexible and has a glass transition temperature of -45 °C - +10 °C, especially -35 °C - +5 °C, preferably -25 °C - 0 °C, in particular -20 °C - 0 °C, particularly preferred -20 °C - -10°C. Most preferred are redispersible polymer powders with these glass transition temperatures. The Tg of polymers can be measured for example by dynamic mechanical analysis.

According to a particularly preferred embodiment, the synthetic polymer thus is a redispersible powder comprising a copolymer of vinyl acetate and ethylene with a glass transition temperature of between -45 °C - +10 °C, preferably -20 °C - 0 °C.

A composition **C** comprises at least one synthetic polymer in 2 - 30 wt.-%, preferably 10 - 30 wt.-%, most preferred 15 - 25 wt.-%, each based on the total weight of the composition **C.**

According to a preferred embodiment, the ratio of the sum of weights of the at least one binder and the at least one pozzolanic material to the weight of the at least one synthetic polymer is in the range of 1:10 to 10:1, preferably 1:6 to 5:1, especially 1:2 to 2:1. For the calculation of said weight ratio, the total weight of all binders selected from any of natural hydraulic lime (NHL), formulated lime (FL), and/or hydraulic lime (HL), the total weight of all pozzolanic materials as well as the total weight of all synthetic polymers is to be used.

A composition **C** is essentially free of Portland cement. Most preferably, a composition **C** is free of any cements other than lime cement. According to especially preferred embodiments, a composition **C** is thus free of any of ordinary Portland cement, Portland composite cement, blast furnace cement, pozzolanic cement, composite cement, calcium aluminate cement, and calcium sulfoaluminate cement.

A composition **C** is thus especially essentially free of any cement of types CEM I, CEM II, CEM III, CEM IV, or CEM V as described in EN 197-1.

"Essentially free of Portland cement" means within the present context that the content of Portland cement is < 3 wt.-%, preferably < 2 wt.-%, more preferably < 1 wt.-%, still more preferably < 0.5 wt.-%, especially < 0.1 wt.-%, each based on the total weight of the respective material.

A composition **C** may further comprise other substances such as but not limited to non-reactive fillers (e.g. fine calcium carbonate), fibers (e.g. cellulose fibers, glass fibers and/or PE fibers), rheology modifiers (especially layered silicates), plasticizers, defoamers, accelerators, retarders, pigments, chromium VI reducers, biocides and/or wetting agents, de-dusting additives. According to one embodiment, the composition **C** additionally comprises a plasticizer, preferably a polycarboxylate ether. Polycarboxylate ethers are especially suitable if a composition **C** is applied by a continuous spray application as defined below. This ensures that mixing with water and pumping through hoses is possible without problems. According to another embodiment, the composition **C** additionally comprises a de-dusting additive which is a hydrocarbon. This ensures that less dust is emitted during handling and especially mixing of the composition **C** with water. A de-dusting additive is particularly suitable if the composition **C** is a dry composition in powder form.

A composition **C** of the present invention is essentially free of Portland cement or other cements as defined above. Furthermore, a composition **C** is free of CaSO₄ based binders, such as for example calciumsulfate hemihydrate and anhydrite, as these may lead to brittleness and/or instability of the hardened mixtures in the presence of water.

According to a particularly preferred embodiment, a composition **C** is a dry composition, especially a dry composition in powder form. This means that the composition **C** has a water content of < 5 wt.-%, preferably < 2 wt.-%, more preferably < 1 wt.-%, still more preferably < 0.5 wt.-%, especially < 0.1 wt.-%, each based on the total weight of the composition **C.**

A preferred composition **C** thus comprises or consists of (in each case based on the total weight of the composition **C**):
a) 2 - 15 wt.-%, preferably 3-10 wt.-%, more preferably 5-8 wt.-% of natural hydraulic lime (NHL),
b) 1-20 wt.-%, preferably 2-16 wt.-%, more preferably 5-10 wt.-% of at least one pozzolanic material,
c) 40 - 80 wt.-%, preferably 45 - 70 wt.-%, more preferably in 50 - 65 wt.-% of at least one aggregate,
d) 2 - 30 wt.-%, preferably 15 - 25 wt.-% of at least one synthetic polymer,
e) optionally 0 - 6 wt.-%, preferably 1 - 5 wt.-% of at least one of non-reactive fillers, fibers, rheology modifiers, plasticizers, defoamers, accelerators, retarders, pigments, chromium VI reducers, biocides and/or wetting agents.

Another preferred composition **C** thus comprises or consists of (in each case based on the total weight of the composition **C**):
a) 2-10 wt.-% of natural hydraulic lime (NHL),
b) 5-10 wt.-% of at least one pozzolanic material,
c) 50 - 65 wt.-% of sand, and
d) 10 - 25 wt.-% of at least one synthetic polymer which is a redispersible polymer powder.

Yet another preferred composition **C** thus comprises or consists of (in each case based on the total weight of the composition **C**):
e) 3-10 wt.-% of natural hydraulic lime (NHL),
f) 5-10 wt.-% of at least one pozzolanic material,
g) 50 - 65 wt.-% of sand,
h) 15 - 25 wt.-% of at least one synthetic polymer which is a redispersible polymer powder,
i) 0.1 - 2 wt.-% of fibers,
j) 1-5 wt.-% of at least one layered silicate,
k) 0.05 - 0.15 wt.-% of a defoamer,
l) 0.01 - 0.02 wt.-% of a chromium VI reducer, and
m) 0.1 - 0.5 wt.-% of a pigment.

Still another preferred composition **C** thus comprises or consists of (in each case based on the total weight of the composition **C**):
a) 2-15 wt.-% of natural hydraulic lime (NHL),
b) 2-16 wt.-% of at least one pozzolanic material,
c) 45 - 65 wt.-% of sand,
d) 10- 30 wt.-% of at least one synthetic polymer which is a redispersible polymer powder, and
e) 1-5 wt.-% of at least one layered silicate.

Still another preferred composition **C** thus comprises or consists of (in each case based on the total weight of the composition **C**):
a) 5-10 wt.-% of natural hydraulic lime (NHL),
b) 5-10 wt.-% of at least one pozzolanic material,
c) 50 - 80 wt.-% of sand, and
d) 10- 30 wt.-% of at least one synthetic polymer which is a redispersible polymer powder.

Still another preferred composition **C** thus comprises or consists of (in each case based on the total weight of the composition **C**):
a) 5-10 wt.-% of formulated lime (FL),
b) 5-10 wt.-% of at least one pozzolanic material,
c) 50 - 80 wt.-% of sand, and
d) 10- 30 wt.-% of at least one synthetic polymer which is a redispersible polymer powder.

Still another preferred composition **C** thus comprises or consists of (in each case based on the total weight of the composition **C**):
a) 5-10 wt.-% of natural hydraulic lime (NHL),
b) 5-10 wt.-% of metakaolin, silica fume, furnace slag, fly ash, rice husk ash, pumice, volcanic ashes, zeolites, diatomaceous earth, or a mixture thereof,
c) 50- 80 wt.-% of sand, and
d) 10- 30 wt.-% of at least one synthetic polymer which is a redispersible polymer powder.

Still another preferred composition **C** thus comprises or consists of (in each case based on the total weight of the composition **C**):
a) 2-15 wt.-% of natural hydraulic lime (NHL),
b) 2-16 wt.-% of at least one pozzolanic material,
c) 45 - 65 wt.-% of at least one aggregate,
d) 10- 30 wt.-% of at least one synthetic polymer which is a redispersible polymer powder, and
e) 0.01 - 2 wt.-% of a polycarboxylate ether.

Still another preferred composition **C** thus comprises or consists of (in each case based on the total weight of the composition **C**):
a) 2-15 wt.-% of natural hydraulic lime (NHL),
b) 2-16 wt.-% of at least one pozzolanic material,
c) 45 - 65 wt.-% of at least one aggregate,
d) 10- 30 wt.-% of at least one synthetic polymer which is a redispersible polymer powder, and
e) 0.01 - 2 wt.-% of a de-dusting additive, preferably of a hydrocarbon.

According to preferred embodiments, a composition **C** is a one-component composition. This means that all materials constituting said composition **C** are comprised in a mixed state within a single packaging. A one-component composition **C** preferably is a dry powder. Such dry, powdered, one-component compositions have the advantage that they can be stored and transported for prolonged times. They can also easily be handled and mixed with water at the site of application and less errors may occur during metering at the site of application.

Water within the present context can be any water available such as distilled water, purified water, tap water, mineral water, spring water, well water, waste water or salt water. However, the use of waste water is possible only in cases where the composition of such waste water is known and where none of the impurities comprised may impart the functionality of any other component of the composition of the present invention. The use of salt water is limited to cases where its high content of chlorides does not constitute a risk of corrosion of steel reinforcement.

Water is preferably mixed with a composition **C** in a weight ratio of water to powder in the range of 1:1 to 1:11, preferably of 1:2 to 1:8, more preferably of 1:2 to 1:5. The term "powder" relates to the sum of components a)-d) of the composition **C.** The said weight ratio of water to powder thus relates to the ratio of the weight of water to the sum of weights of components a)-d) of composition **C.** If water is added within these ranges mixtures with non-sag properties result which significantly facilitates the application, especially on vertical substrates or substrates with an inclination.

According to especially preferred embodiments, the weight ratio of water to powder is adjusted to control the rheology of the resulting mixture. A higher amount of water will lead to a more flowable mixture and a lower amount of water to a more pasty mixture. The rheology may be adjusted by the amount of water in a way to yield a mixture with a rheology ranging from self-levelling to very thick.

Methods and devices for mixing of water with a composition **C** are not particular limited and are known to the person skilled in the art. It is for example possible to mix water with a composition **C** by means of a hand held agitator, Hobart mixer, portable concrete mixer, mixing truck, mixing bucket, paddle mixer, jet mixer, screw mixer, auger mixer, horizontal single shaft mixer, twin shaft paddle mixer, vertical shaft mixer, ribbon blender, orbiting mixer, change-can mixer, tumbling vessel, vertical agitated chamber or air agitated operations. Mixing can be continuously, semi-continuously or batch-wise. Continuous mixing offers the advantage of a high material throughput.

The process of the present invention comprises a step of applying the mixture of water and a composition **C** as defined above to a porous construction material as defined above.

It is possible to apply said mixture of water and a composition **C** by any means known to the person skilled in the art. According to one embodiment, the mixture of water and a composition **C** is applied by trowel, brush or roller. According to another embodiment, the mixture of water and a composition **C** is applied in a spray application.

Spray applications have the advantage that the application can be done very quickly and in a continuous manner. Suitable equipment for such spray applications is known to the person skilled in the art. According to an especially preferred embodiment, a process of the present invention is run in a continuous manner. Such process is characterized in that water and a composition **C** are mixed continuously and are supplied to a spray head in a continuous manner. This allows for a continuous spray application. According to embodiments, the mixture of water and a composition **C** is thus applied in a spray application, preferably a continuous spray application.

A process of the present invention may also comprise a second or third step of applying the mixture of water and a composition **C** to a porous construction material as defined above. It is, in other words, possible to apply the mixture of water and a composition **C** in a process of the present invention for waterproofing of porous construction materials in one layer, in two layers or in three layers. According to a particularly preferred embodiment, a process of the present invention comprises two steps of applying the mixture of water and a composition **C** to a porous construction material. The mixture of water and a composition **C** is thus applied in two layers.

According to embodiments, the mixture of water and a composition **C** is applied in a process of the present invention to a porous construction material to yield a total layer thickness of 0.5 - 50 mm, preferably 1-40 mm, more preferably 2-25 mm, especially 3-10 mm. This layer thickness refers to the total layer thickness of the mixture of water and a composition **C** as described above and applied to a porous construction materal before drying and hardening. A process of the present invention may thus be characterized in that the mixture of water and a composition **C** is applied in a one-step procedure as one single layer or in a two-step procedure as two layers to yield a total layer thickness of 0.5 - 50 mm, preferably 1 - 40 mm, more preferably 2-25 mm, especially 3-10 mm. According to a preferred embodiment, the mixture of water and a composition **C** is applied in in two layers This helps to avoid imperfections such as air bubbles or inhomogeneous layer thickness and thus leads to a particularly good waterproofing performance.

If a process of the present invention comprises two steps of applying the mixture of water and a composition **C,** it is preferred that the layer thickness applied in the first step and the layer thickness applied in the second step is the same. To achieve a total layer thickness of, for example, 10 mm, it is thus preferred to apply the mixture of water and a composition **C** in a first step with a layer thickness of 5 mm and in a second step with a layer thickness of 5 mm.

Hardening of a composition **C** occurs by the reaction of the at least one binder selected from natural hydraulic lime (NHL), formulated lime (FL) and hydraulic lime (HL) and pozzolanic materials with water. Hardening thus starts when the composition **C** is mixed with water. During production, storage, and transport, a composition **C** thus needs to be protected from moisture.

Hardening proceeds with time and physical properties, e.g. compressive strength, adhesion strength, etc. are developed thereby. A composition **C** will harden at various temperatures. It is, however, preferred to harden a composition **C** at temperatures between +4 °C and +50 °C, preferably between +5 °C and +35 °C. A process of the present invention is thus preferably carried out at temperatures between +4 °C and +50 °C, preferably between +5 °C and +35 °C.

It is an advantage of the mixture of water and a composition **C** to quickly develop a dry surface. This ensures that a subsequently applied material, e.g. a second layer of the mixture of water and a composition **C,** does not slip or fall down. In a process of the present invention, it is thus possible to apply the mixture of water and a composition **C** in two steps and with a waiting time of not more than 60 min, preferably not more than 45 min, especially not more than 30 min in between steps. These numbers apply to an application temperature range of between +4 °C and +50 °C, preferably +5 °C and +35 °C, especially +15 °C and +25 °C. A process of the present invention may thus be characterized in that the waiting time between a first step and a second step of applying the mixture of water and a composition **C** to a porous construction material is 60 min or less, preferably 45 min or less, more preferably 30 min or less at a temperature of between +4 °C and +50 °C, preferably +5 °C and +35 °C, especially +15 °C and +25 °C.

It is possible to include further steps into a process of the present invention. Such further steps typically are directed to further increase the performance of a porous construction material treated in a process for waterproofing as described above. According to embodiments, a process of the present invention includes one or more further steps selected from cleaning the surface of the porous construction material, priming the surface (especially in cases where the construction material has a very high porosity), and application of further layers on top of the mixture of water and a composition **C,** such further layers being selected e.g. from decorative paint, decorative coating or further cementitious layers.

It is another aspect of the present disclosure, which is not claimed, to provide a porous construction material, for example as part of a building, treated in a process for waterproofing as described above.

It is especially preferred, if a porous construction material, for example as part of a building, treated in a process for waterproofing comprises at least one layer of a hardened mixture of water and a composition **C.**

A porous construction material, for example as part of a building, treated in a process for waterproofing as described above and comprising at least one layer of a hardened mixture of water and a composition **C** has a reduced water uptake. According to especially preferred embodiments, the capillary water absorption coefficient of such a treated porous construction material is not more than 0.5 kg / (m²·h^{0.5}), preferably not more than 0.1 kg / (m²·h^{0.5}), more preferably not more than 0.05 kg / (m²·h^{0.5}), especially not more than 0.02 kg / (m²·h^{0.5}), as measured according to EN 1062-3.

A porous construction material, for example as part of a building, treated in a process for waterproofing as described above and comprising at least one layer of a hardened mixture of water and a composition **C** has a reduced water vapor permeability. According to especially preferred embodiments, the water vapor transmission rate of such treated porous construction material is between 15 and 150 g / (m²·d) and/or the diffusion equivalent air layer thickness s_{D} is lower than 5 m, especially between 0.14 and 1.4 m, both as measured according to EN ISO 7783.2.

A porous construction material treated in a process for waterproofing as described above can be part of a building. It is preferred if such treated construction materials are part of an outside structure which is subject to contact with water, for example caused by dew, rain, spray, and/or tides. It is equally preferred if such treated porous construction materials are part of a wet-room, for example a bathroom, a kitchen, or a swimming pool.

According to preferred embodiments, a porous construction material treated in a process for waterproofing as described above can be part of basement walls, floor structures, drainages, pipes, silos, stairs, bathrooms, kitchens, swimming pools, balconies, terraces, ponds or basins, harbor structures and works of civil engineering, e.g. tunnels. It is especially preferred that a porous construction material treated in a process for waterproofing as described above is part of a tiled structure, especially it is the substrate for the application of ceramic tiles.

According to an especially preferred embodiment, a porous construction material treated in a process for waterproofing as described above is an especially well-suited substrate for the application of tiles, e.g. a floor or a wall. The process of the present invention thus also pertains to the waterproofing of porous construction materials for use beneath ceramic tiles.

In another aspect the present invention relates to the use of a composition **C** comprising, in each case based on the total dry weight of the composition **C,**
a) 2 - 15 wt.-% of at least one binder selected from natural hydraulic lime (NHL), formulated lime (FL), and hydraulic lime (HL),
b) 1 - 20 wt.-% of at least one pozzolanic material,
c) 40 - 80 wt.-% of at least one aggregate,
d) 2 - 30 wt.-% of at least one synthetic polymer,
and wherein the content of Portland cement in said composition **C** is < 3 wt.-%, preferably < 2 wt.-%, more preferably < 1 wt.-%, still more preferably < 0.5 wt.-%, especially < 0.1 wt.-%, in a process for the waterproofing of porous construction materials as described above.

A process of the present invention is suitable to be integrated in the construction of new structures and/or in the refurbishment of existing structures. It is, for example possible, to integrate a process of the present invention into the construction of basement walls, floor structures, drainages, pipes, silos, stairs, bathrooms, kitchens, swimming pools, balconies, terraces, ponds or basins, harbor structures and works of civil engineering, e.g. tunnels. A process of the present invention is especially suitable to be integrated in the construction or refurbishment of buildings according to principles 1, 2, 5, 6, 7, and 8, especially according to principles 1, 2, and 8, according to EN 1504-9.

In another aspect, the present invention thus relates to the use of a composition **C** comprising, in each case based on the total dry weight of the composition **C,**
a) 2 - 15 wt.-% of at least one binder selected from natural hydraulic lime (NHL), formulated lime (FL), and hydraulic lime (HL),
b) 1 - 20 wt.-% of at least one pozzolanic material,
c) 40 - 80 wt.-% of at least one aggregate,
d) 2 - 30 wt.-% of at least one synthetic polymer,
wherein the content of Portland cement in said composition **C** is < 3 wt.-%, preferably < 2 wt.-%, more preferably < 1 wt.-%, still more preferably < 0.5 wt.-%, especially < 0.1 wt.-%,

in a process for the construction or refurbishment of buildings according to principles 1, 2, 5, 6, 7, and 8 according to EN 1504-9.

According to embodiments, a composition **C** can be used in a process for the construction or refurbishment of buildings according to principles 1, 2, 5, 6, 7, and 8 according to EN 1504-9. Buildings can be for example basement walls, floor structures, drainages, pipes, silos, stairs, bathrooms, kitchens, swimming pools, balconies, terraces, ponds or basins, harbor structures and works of civil engineering, e.g. tunnels.

A process of the present invention is equally especially suitable to be integrated in the restoration of new or historic buildings, for example to prepare substructures in wet rooms and for tiling.

The hardened mixture of water and a composition **C** as described above, fulfils the requirements of standard EN 14891:2012 for products CM, CM O1, CM P and CM O1P.

Especially, the hardened mixture of water and a composition **C** as described above fulfils the requirements of EN 14891:2012 regarding tensile adhesion strength, waterproofing, and crack bridging ability. It is thus possible to use such a hardened mixture of water and a composition **C** as a water impermeable product beneath ceramic tiles.

According to a further embodiment, a composition **C** can thus be used for the restoration of historical buildings.

According to yet another embodiment, such a composition **C** can thus be used as a water impermeable product beneath ceramic tiles.

In a last aspect the present invention thus relates to the use of a mixture of water and a composition **C,** the composition **C** comprising, in each case based on the total weight of the composition **C,**
a) 2 - 15 wt.-% of at least one binder selected from natural hydraulic lime (NHL), formulated lime (FL), and hydraulic lime (HL),
b) 1 - 20 wt.-% of at least one pozzolanic material,
c) 40 - 80 wt.-% of at least one aggregate,
d) 2 - 30 wt.-% of at least one synthetic polymer,

wherein the content of Portland cement in said composition **C** is < 3 wt.-%, preferably < 2 wt.-%, more preferably < 1 wt.-%, still more preferably < 0.5 wt.-%, especially < 0.1 wt.-%,
as a water impermeable product beneath ceramic tiles.

The following examples will further illustrate the present invention. They are not intended to limit the scope of the invention in any way.

### EXAMPLES

Dry mixtures 1 - 3 of the following table 1 were prepared by mixing all ingredients in a Hobart mixer until visually homogeneous. Mixtures 1 - 3 are compositions **C** according to the present invention, mixture 4 is a reference mixture not according to the present invention.

**Table 1: Dry mixtures**

| Ingredients (wt.-% in all cases) | Mix 1 | Mix 2 | Mix 3 | Mix 4 (Ref) |
|---|---|---|---|---|
| NHL*¹ | 8 | 8 | 8 | 0 |
| OPC | 0 | 0 | 0 | 6 |
| Silica fume | 4 | 2.5 | 0 | 2.5 |
| Metakaolin | 0 | 0 | 2.5 | 0 |
| Silica sand (0.1-0.2 mm) | 59 | 59.5 | 0 | 0 |
| Quartz sand (0,1-0,2 mm) | 0 | 0 | 59.5 | 59 |
| CaCO₃^{*2} | 7.3 | 3.2 | 2.7 | 4 |
| RDP^{*3} | 20.5 | 21.3 | 21.3 | 23.5 |
| Additives^{*4} | 1.2 | 5.5 | 6 | 5 |

| | | | | |
|---|---|---|---|---|
| ^{*1} NHL 3,5 from VILLAGA S.r.l. (Vicenza, Italy) ^{*2} Calcium carbonate 0-0,1 mm from Mineraria Ligure S.r.l, (Marina di Carrara, Italy) ^{*3}RDP: redispersible polymer powder (vinyl acetate, ethylene copolymer with Tg -7 °C) ^{*4} plasticizer, fibers, layered silicate, defoamer, chromate reducer, pigment | | | | |

The dry mixtures as described in table 1 were each mixed in a Hobart mixer with water for 3 minutes. The water to powder ratio was 0.28 in each case. The wet mixtures thus obtained had a soft and creamy consistency and were homogeneous and free of lumps. Wet mixtures thus prepared were used to measure the following:
- Slump flow according to EN 12350-5 (without jolts, measured directly after mixing with water)
- Time to surface dryness to the touch by hand on a layer of 1.5 mm thickness
- Tensile adhesive strength according to EN 14891 (no primers used; wet mixtures applied in two steps with a total thickness of 3 mm; hardening of wet mixtures for 24h at 23°C/ 50% r.h.; bonding of tiles with adhesive Technorap-2 White from Technolkolla)
- Water absorption coefficient according to EN 1062-3 (untreated substrates used have a coefficient of liquid water permeability of more than 1 kg / (m²·h^{0.5})
- Waterproofing according to EN 14891 (no primers used; wet mixtures applied in two steps with a total thickness of 3 mm; hardening of wet mixtures for 28d at 23°C/ 50% r.h.)
- Crack bridging capability according to EN 14891 (no primers used; wet mixtures applied in two steps with a total thickness of 3 mm)

**Table 2: Results**

| Measurement | Requirement acc. to standard EN 14891 | Mix 1 | Mix 2 | Mix 3 | Mix 4 (Ref) |
|---|---|---|---|---|---|
| Slump flow [mm] | | 250 | 211 | 250 | 230 |
| Surface dry to the touch [min] | | 50 | 60 | 60 | 50 |
| Initial tensile adhesive strength [MPa] | ≥ 0.5 | 1.96 | 1.32 | 1.1 | 2.2 |
| Tensile adhesive strength after water contact [MPa] | ≥0.5 | 1.24 | 1.0 | 0.89 | 1.6 |
| Tensile adhesive strength after heat ageing [MPa] | ≥ 0.5 | 2.91 | 1.16 | 0.89 | 3.0 |
| Tensile adhesive strength after freeze-thaw cycles [MPa] | ≥ 0.5 | 0.80 | 0.70 | 0.75 | 1.1 |
| Tensile adhesive strength after contact with lime water [MPa] | ≥ 0.5 | 1.38 | 1.15 | 0.87 | 1.3 |
| Tensile adhesive strength after contact with chlorinated water [MPa] | ≥ 0.5 | n.m. | 1.01 | 1.1 | 1.1 |
| Water absorption coefficient [kg / (m²·h^{0.5})] | | 0.019 | 0.020 | 0.016 | 0.020 |
| Waterproofing [g weight gain] | ≤ 20 | 2.3 | 1.9 | 3.5 | 0 |
| Crack bridging (20°C) [mm] | ≥ 0.75 | 0.9 | 0.8 | 0.9 | 0.95 |
| Crack bridging (-5°C) [mm] | ≥ 0.75 | n.m. | 0.75 | 1.4 | 0.91 |

As can be seen from the above tables, compositions according to the present invention can fulfill requirements of standard EN 14891 and meet the requirements of classes O1 and P as layed out therein. Compositions according to the present invention have a comparable performance as compositions based on OPC.

## Claims

1. Process for the waterproofing of porous construction materials, said process comprising the steps of
- mixing water and a composition **C,** the composition **C** comprising, in each case based on the total weight of the composition **C,**
a) 2 - 15 wt.-% of at least one binder selected from natural hydraulic lime (NHL), formulated lime (FL), and hydraulic lime (HL),
b) 1 - 20 wt.-% of at least one pozzolanic material,
c) 40 - 80 wt.-% of at least one aggregate,
d) 2 - 30 wt.-% of at least one synthetic polymer,
and wherein the content of Portland cement in said composition **C** is < 3 wt.-%,
- applying the mixture thus obtained to a porous construction material, and
- optionally hardening the applied mixture.

2. Process according to claim 1, **characterized in that** the at least one pozzolanic material is selected from metakaolin, silica fume, furnace slag, fly ash, rice husk ash, pumice, volcanic ashes, zeolites and/or diatomaceous earth.

3. Process according to claim 1 or 2, **characterized in that** the ratio of the sum of weights of the at least one binder and the at least one pozzolanic material to the weight of the at least one synthetic polymer is in the range of 1:10 to 10:1, preferably 1:6 to 5:1, especially 1:2 to 2:1.

4. Process according to any of the preceding claims, **characterized in that** the synthetic polymer is a redispersible powder comprising a copolymer of vinyl acetate and ethylene with a glass transition temperature of between -45 °C - +10 °C, preferably -20 °C - 0 °C.

5. Process according to any of the preceding claims, **characterized in that** the mixture of water and a composition **C** is applied to a porous construction material to yield a total layer thickness of 0.5 - 50 mm, preferably 1-40 mm, more preferably 2-25 mm, especially 3-10 mm.

6. Process according to any of the preceding claims, **characterized in that** the mixture of water and a composition **C** is applied in two layers.

7. Process according to any of the preceding claims, **characterized in that** the mixture of water and a composition **C** is applied by trowel, brush or roller.

8. Process according to any of the preceding claims, **characterized in that** the mixture of water and a composition **C** is applied in a spray application, preferably a continuous spray application.

9. Process according to any of the preceding claims, **characterized in that** the porous construction material is a cementitious material or a screed.

10. Use of a composition **C** comprising, in each case based on the total weight of the composition **C,**
a) 2 - 15 wt.-% of at least one binder selected from natural hydraulic lime (NHL), formulated lime (FL), and hydraulic lime (HL),
b) 1 - 20 wt.-% of at least one pozzolanic material,
c) 40 - 80 wt.-% of at least one aggregate,
d) 2 - 30 wt.-% of at least one synthetic polymer,
wherein the content of Portland cement in said composition **C** is < 3 wt.-%,
in a process according to any of claims 1-9.

11. Use of a composition **C** comprising, in each case based on the total weight of the composition **C,**
a) 2 - 15 wt.-% of at least one binder selected from natural hydraulic lime (NHL), formulated lime (FL), and hydraulic lime (HL),
b) 1 - 20 wt.-% of at least one pozzolanic material,
c) 40 - 80 wt.-% of at least one aggregate,
d) 2 - 30 wt.-% of at least one synthetic polymer,
wherein the content of Portland cement in said composition **C** is < 3 wt.-%,
in a process for the construction or refurbishment of buildings according to principles 1, 2, 5, 6, 7, and 8 according to EN 1504-9.

12. Use of a composition **C** comprising, in each case based on the total weight of the composition **C,**
a) 2 - 15 wt.-% of at least one binder selected from natural hydraulic lime (NHL), formulated lime (FL), and hydraulic lime (HL),
b) 1 - 20 wt.-% of at least one pozzolanic material,
c) 40 - 80 wt.-% of at least one aggregate,
d) 2 - 30 wt.-% of at least one synthetic polymer,
wherein the content of Portland cement in said composition **C** is < 3 wt.-%,
as a water impermeable product beneath ceramic tiles.

## Patentansprüche

1. Verfahren zur Wasserabdichtung von porösen Baustoffen, wobei das Verfahren folgende Schritte umfasst:
- Mischen von Wasser und einer Zusammensetzung **C,** wobei die Zusammensetzung **C** umfasst, jeweils bezogen auf das Gesamtgewicht der Zusammensetzung **C,**
a) 2-15 Gew.-% mindestens eines Bindemittels, das aus natürlichem hydraulischem Kalk (NHL), formuliertem Kalk (FL) und hydraulischem Kalk (HL) ausgewählt ist,
b) 1-20 Gew.-% mindestens eines puzzolanischen Materials,
c) 40-80 Gew.-% mindestens eines Zuschlagstoffs,
d) 2-30 Gew.-% mindestens eines synthetischen Polymers
und wobei der Gehalt an Portlandzement in der Zusammensetzung **C** < 3 Gew.-% ist,
- Aufbringen der so erhaltenen Mischung auf einen porösen Baustoff und
- gegebenenfalls Aushärten der aufgebrachten Mischung.

2. Verfahren nach Anspruch 1, **dadurch gekennzeichnet, dass** das mindestens eine puzzolanische Material ausgewählt ist aus Metakaolin, Silikastaub, Hochofenschlacke, Flugasche, Reisschalenasche, Bimsstein, Vulkanaschen, Zeolithen und/oder Diatomeenerde.

3. Verfahren nach Anspruch 1 oder 2, **dadurch gekennzeichnet, dass** das Verhältnis der Summe der Gewichte des mindestens einen Bindemittels und des mindestens einen puzzolanischen Materials zum Gewicht des mindestens einen synthetischen Polymers im Bereich von 1:10 bis 10:1, bevorzugt 1:6 bis 5:1, speziell 1:2 bis 2:1, liegt.

4. Verfahren nach einem der vorhergehenden Ansprüche, **dadurch gekennzeichnet, dass** es sich bei dem synthetischen Polymer um ein redispergierbares Pulver handelt, das ein Copolymer von Vinylacetat und Ethylen mit einer Glasübergangstemperatur zwischen -45°C - +10 °C, vorzugsweise -20 °C - 0°C, umfasst.

5. Verfahren nach einem der vorhergehenden Ansprüche, **dadurch gekennzeichnet, dass** die Mischung von Wasser und einer Zusammensetzung **C** auf einen porösen Baustoff aufgebracht wird, um eine Gesamtschichtdicke von 0,5 - 50 mm, bevorzugt 1 - 40 mm, weiter bevorzugt 2 - 25 mm, speziell 3 - 10 mm, zu erhalten.

6. Verfahren nach einem der vorhergehenden Ansprüche, **dadurch gekennzeichnet, dass** die Mischung von Wasser und einer Zusammensetzung **C** in zwei Schichten aufgebracht wird.

7. Verfahren nach einem der vorhergehenden Ansprüche, **dadurch gekennzeichnet, dass** die Mischung von Wasser und einer Zusammensetzung **C** mit Kelle, Pinsel oder Rolle aufgetragen wird.

8. Verfahren nach einem der vorhergehenden Ansprüche, **dadurch gekennzeichnet, dass** die Mischung von Wasser und einer Zusammensetzung **C** in einem Spritzverfahren, vorzugsweise in einem kontinuierlichen Spritzverfahren, aufgebracht wird.

9. Verfahren nach einem der vorhergehenden Ansprüche, **dadurch gekennzeichnet, dass** es sich bei dem porösen Baustoff um ein zementöses Material oder einen Estrich handelt.

10. Verwendung einer Zusammensetzung **C,** umfassend, jeweils bezogen auf das Gesamtgewicht der Zusammensetzung **C,**
a) 2-15 Gew.-% mindestens eines Bindemittels, das aus natürlichem hydraulischem Kalk (NHL), formuliertem Kalk (FL) und hydraulischem Kalk (HL) ausgewählt ist,
b) 1-20 Gew.-% mindestens eines puzzolanischen Materials,
c) 40-80 Gew.-% mindestens eines Zuschlagstoffs,
d) 2-30 Gew.-% mindestens eines synthetischen Polymers,
wobei der Gehalt an Portlandzement in der Zusammensetzung **C** < 3 Gew.-% ist,
bei einem Verfahren nach einem der Ansprüche 1-9.

11. Verwendung einer Zusammensetzung **C,** umfassend, jeweils bezogen auf das Gesamtgewicht der Zusammensetzung **C,**
a) 2-15 Gew.-% mindestens eines Bindemittels, das aus natürlichem hydraulischem Kalk (NHL), formuliertem Kalk (FL) und hydraulischem Kalk (HL) ausgewählt ist,
b) 1-20 Gew.-% mindestens eines puzzolanischen Materials,
c) 40-80 Gew.-% mindestens eines Zuschlagstoffs,
d) 2-30 Gew.-% mindestens eines synthetischen Polymers,
wobei der Gehalt an Portlandzement in der Zusammensetzung **C** < 3 Gew.-% ist,
bei einem Verfahren zum Errichten oder Renovieren von Gebäuden gemäß den Prinzipien 1, 2, 5, 6, 7 und 8 gemäß EN 1504-9.

12. Verwendung einer Zusammensetzung **C,** umfassend, jeweils bezogen auf das Gesamtgewicht der Zusammensetzung **C,**
a) 2-15 Gew.-% mindestens eines Bindemittels, das aus natürlichem hydraulischem Kalk (NHL), formuliertem Kalk (FL) und hydraulischem Kalk (HL) ausgewählt ist,
b) 1-20 Gew.-% mindestens eines puzzolanischen Materials,
c) 40-80 Gew.-% mindestens eines Zuschlagstoffs,
d) 2-30 Gew.-% mindestens eines synthetischen Polymers,
wobei der Gehalt an Portlandzement in der Zusammensetzung **C** < 3 Gew.-% ist,
als ein wasserundurchlässiges Produkt unter Keramikfliesen.

## Revendications

1. Procédé pour l'imperméabilisation de matériaux de construction poreux, ledit procédé comprenant les étapes de
- mélange d'eau et d'une composition **C,** la composition **C** comprenant, en chaque cas sur la base du poids total de la composition **C,**
a) 2 à 15 % en poids d'au moins un liant choisi parmi de la chaux hydraulique naturelle (NHL), de la chaux formulée (FL), et de la chaux hydraulique (HL),
b) 1 à 20 % en poids d'au moins un matériau pouzzolanique,
c) 40 à 80 % en poids d'au moins un agrégat,
d) 2 à 30 % en poids d'au moins un polymère synthétique,
et la teneur en ciment Portland dans ladite composition **C** étant < 3 % en poids,
- application du mélange ainsi obtenu sur un matériau de construction poreux, et
- éventuellement durcissement du mélange appliqué.

2. Procédé selon la revendication 1, **caractérisé en ce que** l'au moins un matériau pouzzolanique est choisi parmi le métakaolin, la fumée de silice, le laitier de haut-fourneau, les cendres volantes, les cendres de balles de riz, la pierre ponce, les cendres volcaniques, les zéolithes et/ou la terre à diatomées.

3. Procédé selon la revendication 1 ou 2, **caractérisé en ce que** le rapport de la somme des poids de l'au moins un liant et de l'au moins un matériau pouzzolanique par rapport au poids de l'au moins un polymère synthétique est dans la plage de 1 : 10 à 10 : 1, préférablement 1 : 6 à 5 : 1, notamment 1 : 2 à 2 : 1.

4. Procédé selon l'une quelconque des revendications précédentes, **caractérisé en ce que** le polymère synthétique est une poudre redispersible comprenant un copolymère d'acétate de vinyle et d'éthylène doté d'une température de transition vitreuse comprise entre -45 °C et +10 °C, préférablement de -20 °C à 0 °C.

5. Procédé selon l'une quelconque des revendications précédentes, **caractérisé en ce que** le mélange d'eau et d'une composition **C** est appliqué sur un matériau de construction poreux pour donner une épaisseur totale de couche de 0,5 à 50 mm, préférablement de 1 à 40 mm, plus préférablement de 2 à 25 mm, notamment de 3 à 10 mm.

6. Procédé selon l'une quelconque des revendications précédentes, **caractérisé en ce que** le mélange d'eau et d'une composition **C** est appliqué en deux couches.

7. Procédé selon l'une quelconque des revendications précédentes, **caractérisé en ce que** le mélange d'eau et d'une composition **C** est appliqué à la truelle, à la brosse ou au rouleau.

8. Procédé selon l'une quelconque des revendications précédentes, **caractérisé en ce que** le mélange d'eau et d'une composition **C** est appliqué en une application par pulvérisation, préférablement une application par pulvérisation continue.

9. Procédé selon l'une quelconque des revendications précédentes, **caractérisé en ce que** le matériau de construction poreux est un matériau cimentaire ou une chape.

10. Utilisation d'une composition **C** comprenant, en chaque cas sur la base du poids total de la composition **C,**
a) 2 à 15 % en poids d'au moins un liant choisi parmi de la chaux hydraulique naturelle (NHL), de la chaux formulée (FL), et de la chaux hydraulique (HL),
b) 1 à 20 % en poids d'au moins un matériau pouzzolanique,
c) 40 à 80 % en poids d'au moins un agrégat,
d) 2 à 30 % en poids d'au moins un polymère synthétique,
la teneur en ciment Portland dans ladite composition **C** étant < 3 % en poids,
dans un procédé selon l'une quelconque des revendications 1 à 9.

11. Utilisation d'une composition **C** comprenant, en chaque cas sur la base du poids total de la composition **C,**
a) 2 à 15 % en poids d'au moins un liant choisi parmi de la chaux hydraulique naturelle (NHL), de la chaux formulée (FL), et de la chaux hydraulique (HL),
b) 1 à 20 % en poids d'au moins un matériau pouzzolanique,
c) 40 à 80 % en poids d'au moins un agrégat,
d) 2 à 30 % en poids d'au moins un polymère synthétique,
la teneur en ciment Portland dans ladite composition **C** étant < 3 % en poids,
dans un procédé pour la construction ou la rénovation de bâtiments selon les principes 1, 2, 5, 6, 7, et 8 selon la norme EN 1504-9.

12. Utilisation d'une composition **C** comprenant, en chaque cas sur la base du poids total de la composition **C,**
a) 2 à 15 % en poids d'au moins un liant choisi parmi de la chaux hydraulique naturelle (NHL), de la chaux formulée (FL), et de la chaux hydraulique (HL),
b) 1 à 20 % en poids d'au moins un matériau pouzzolanique,
c) 40 à 80 % en poids d'au moins un agrégat,
d) 2 à 30 % en poids d'au moins un polymère synthétique,
la teneur en ciment Portland dans ladite composition **C** étant < 3 % en poids,
en tant que produit imperméable à l'eau en dessous de carreaux de céramique.
